# EUROPEAN PATENT SPECIFICATION

(11) **EP 1 676 384 B1**
(45) Date of publication and mention of the grant of the patent: **19.08.2009**
(21) Application number: 04769698.4
(22) Date of filing: 21.10.2004
(51) Int. Cl.: H04L 12/18, H04L 12/28, H04L 12/56

(54) **METHOD AND APPARATUS FOR FACILITATING MANAGEMENT OF MULTICAST DELIVERY TO MOBILE DEVICES**
VERFAHREN UND VORRICHTUNG ZUR ERMÖGLICHUNG DER VERWALTUNG DER MULTICAST-ABLIEFERUNG AN MOBILE EINRICHTUNGEN
METHODE ET APPAREIL POUR FACILITER LA MULTI-DIFFUSION VERS DES DISPOSITIFS MOBILES

(30) Priority: 22.10.2003 US 513283 P
(43) Date of publication of application: 05.07.2006
(73) Proprietor: Nokia Corporation, 02150 Espoo (FI)
(72) Inventor: OOMMEN, Paul, San Jose, CA 95129-3533 (US); RUCK, Herbert, M., Colleyville, TX 76034 (US)
(74) Representative: Swindell & Pearson
(86) International application number: PCT/IB2004/003463
(87) International publication number: WO 2005/041459

(56) References cited:
- US-A1- 2003 039 361
- US-A1- 2003 054 807
- US-A1- 2003 073 453
- US-A1- 2003 134 622
- US-A1- 2003 134 622
- US-B1- 6 351 467
- "S.R0083-0 Version 1.0 Broadcast-Multicast Service Security Framework" 3GPP2, [Online] 16 October 2003 (2003-10-16), XP002495561 Retrieved from the Internet: URL:http://www.3gpp2.org/public_html/specs /S.R0083-0_v1.0_111103.pdf> [retrieved on 2008-09-10]

## Description

### TECHNICAL FIELD:

This invention relates generally to data communication networks operable with mobile devices or hosts and, more specifically, relates to techniques for providing management of multicast message delivery to mobile hosts in a wireless data communications network.

### BACKGROUND:

In order to make use of the multicast technology supported in the wireless network and the access network, multicast services and applications should be managed at the mobile station. In other words, the mobile station should be able to differentiate between contents in a structured way, so that applications in the mobile station can make use of the contents delivered through multicast flow in a meaningful way. It also helps the management of a specific multicast flow. For example, when the mobile receives a new firmware update, a client in the MS should be able to manage this data, which involves temporary storage, a check for data integrity, version management, firmware encryption if any, and so forth.

3GPP2 is working on different aspects ofmulticasting - air interface specifications, Over the Air (OTA) messaging aspects and network specifications. There are different applications of multicast/broadcast. When the same data should be updated to a large group of mobile stations, multicasting reduces complexity and cost associated with OTA updates. A good example is updating the same firmware to mobile stations, which involves a large data transfer. However, without differentiating flows and contents, the mobile station would not be able to manage a specific multicast flow and content. Another example is using multicast/broadcast to update critical software, to avoid requiring a recall of mobile stations. In this case it is important that the mobile station be able to manage multicast flow and content in a consistent way, which implies a standardized method.

Some current and future mobile data and message network services require sending the same integral unit of data simultaneously to a plurality of mobile hosts such as, for example, cellular telephones and/or PDAs having wireless (e.g., IR or RF) communications capability. This is referred to as a "multicast" type of operation. A typical multicast operation may include sending data associated with the provisioning of a service, as well as data associated with management during the life cycle of a service. Services typically require sending of data to mobile hosts in real time. Data is also typically sent when the service is updated. As may be appreciated, establishing a separate end-to-end delivery session for each mobile host would adversely affect the performance and throughput of networks in the end-to-end path that route the data, as well as in the air interface between the network and individual ones of the mobile hosts.

Current practice delivers data to mobile hosts using low data rate services such as OTA teleservices or PUSH, which can be implemented using short message service (SMS) techniques, or by using circuit switched or packet switched end-to-end methods that require a separate connection for each mobile host (a point-to-point approach). However, as the use of mobile hosts becomes more widespread, and as more and different types of networks are encountered in the end-to-end path between the source of the data and mobile hosts, the current techniques will prove to be inefficient with regard to the use of network bandwidth and throughput.

Conventional multicast protocols specified for Internet Protocol (IP) and mobile IP applications generally take into consideration only the core network and the wireless IP network. Examples of such IP-based protocols include DVMRP (Distance Vector Multicast Routing Protocol), MOSPF (Multicast Extensions to Open Shortest Path First) and PIM-DM (Protocol Independent Multicast-Dense Mode). However, these conventional techniques are not generally suited for multicast management across disparate network types.

In a wireless network environment a mobile host may not be attached at all times to the same network, and the existing multicast routing protocols do not address this situation. For mobile services envisioned for the future, manynetworks maypotentiallybe involved in routing service-related data to mobile hosts. While the existing IP-based multicast routing protocols, such as those referred to above, can be used for routing within IP networks, there is at present no generic mechanism to manage multicast routing in any network. For example, there is currently no generic mechanism to manage the multicast routing of the data sent from the wireless network and routed through an access network, such as a Bluetooth^{™} network.

Representative U.S. Patents that relate to multicast operation with mobile hosts include U.S. 6,477,149 B1, "Network System and Method of Controlling Multicast Group Participation of Mobile Host", Okanoue; U.S. 6,418,138 B1, "Internet Radio Communication System", Cerf et al.; U.S. 6,243,758 B1, "Internetwork Multicast Routing Using Flag Bits Indicating Selective Participation of Mobile Hosts in Group Activities Within Scope", Okanoue; and U.S. 6,240,089 B1, "Method of Multicasting for Mobile Host Used in Any One of Subnetworks Connected to One Another", Okanoue et al.

The foregoing U.S. Patents do not cure the existing deficiencies in mobile host multicast routing protocols with regard to the routing of data through a plurality of different network-types.

### SUMMARY OF THE PREFERRED EMBODIMENTS

The foregoing and other problems are overcome, and other advantages are realized, in accordance with the presently preferred embodiments of these teachings.

Embodiments of the invention describe a novel method and apparatus for classifying mobile multicast applications and service related flow, so that it can be managed at the mobile host.

A method receives a multicast message flow having content and a flow identification, checks a type of content, and passes the flow to the appropriate processing entity.

A method to operate a wireless data communications system includes receiving at a device a multicast message flow comprising content and a flow identification; determining a type of content from multicast identification information that comprises a part of the flow identification; and passing the flow to an appropriate content processing entity.

A mobile host comprises a wireless transceiver coupled to a controller that operates under control of a stored program to receive a multicast message flow comprising content and a flow identification; to determine a type of content from multicast identification information that comprises a part of the flow identification; and to pass the flow to an appropriate content processing entity.

Embodiments of this invention also provide a multicast content server that is coupled to a plurality of mobile hosts via at least one wireless network. The server is operable to send a multicast message flow comprising content and a flow identification towards the plurality of mobile hosts, where the flow identification comprises multicast identification information represented as a data structure. The data structure includes fields such as a type identification field specifying a flow type; a provider identification field for identifying a provider of firmware; a vendor identification for identifying a vendor of firmware; and an application identification field for identifying an application in each of the plurality of mobile hosts that uses the content delivered in the flow.

Also in accordance with embodiments of this invention there is provided a data structure for the management of a multicast flow having content to a plurality of mobile hosts, where the data structure comprises a type identification field specifying a flow type; a provider identification field for identifying a provider of firmware; a vendor identification for identifying a vendor of firmware; and an application identification field for identifying an application in the mobile host that uses the content delivered in the flow.

### BRIEF DESCRIPTION OF THE DRAWINGS

The foregoing and other aspects of these teachings are made more evident in the following Detailed Description of the Preferred Embodiments, when read in conjunction with the attached Drawing Figures, wherein:
Figure 1 is a generic structuring of BCMCS_FLOW_ID creates classes or categories;
Figure 2 is a flowchart showing the process in the Mobile Station during the reception of a BCMCS flow;
Figure 3 shows a non-limiting example of a wireless network that involves a plurality of wireless communications types, including Wireless IP, a Radio Access Network and a Wireless Local Area Network, as well as a multicast service provider, and is one exemplary environment wherein the embodiments of this invention may be realized;
Figure 4 shows a high level view of the BCMCS system; and
Figure 5 is an exemplary conventional CDMA device information subtree, in accordance with IOTA DM, and illustrative of the use of a tree structure to represent the multicast identification information associated with different multicast flows in accordance with certain embodiments of this invention.

### DETAILED DESCRIPTION OF THE PREFERRED EMBODIMENTS

Described herein are methods and apparatus to facilitate the control and management of broadcast-multicast services (BCMCS) flow in a mobile station, also referred to herein as a mobile device and a mobile host. The use of the embodiments of this invention aids a carrier or service provider in sending data to mobile devices using multicast methods. Work is progressing on defining a broadcast-multicast services framework and specifications, and there are several aspects of multicast to consider, including multicast flow and the signaling messages. The embodiments of this invention provide enhancements and improvements to known types of existing broadcast-multicast frameworks.

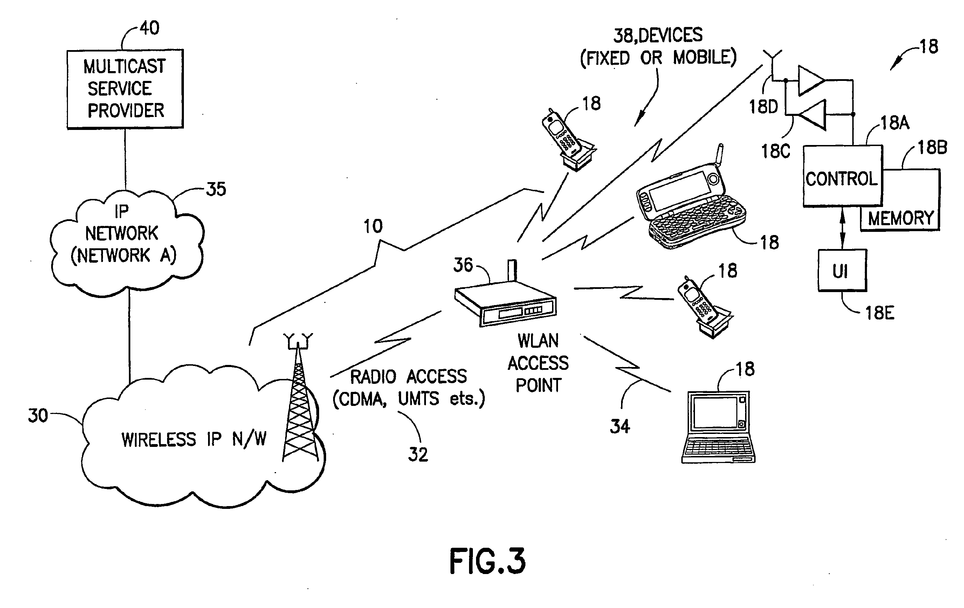

Figure 3 shows a non-limiting example of a wireless network 10 that involves a plurality of wireless communications types, including Wireless IP, a Radio Access Network and a Wireless Local Area Network, as well as a multicast service provider 40 (also referred to as a Content Source (CS), and is one exemplary environment wherein the embodiments of this invention may be realized.

More specifically, Figure 3 shows an example of the wireless network 10 that includes a Wireless IP network 30, a Radio Access Network (RAN) 32 and a Wireless Local Area Network (WLAN) 34 that includes a WLAN access point 36. For example, the WLAN access point 36 can be located at an office, or at a retail establishment, or aboard a cruise ship, a bus or some other means of transportation, and users of the WLAN 34 access same using the WLAN access point 34. The WLAN access point 34 is connected to the wireless IP network 30 over, as an example, a CDMA (high speed link such as CDMA 1x EV-DV or 1x EV-DO) or via an UMTS air interface 32, or any other air interface providing connectivity to the wireless IP network 30. A wired IP network 35 is also shown coupled to the wireless IP network 30.

The users are shown as having a plurality of different types of devices 38, which can be fixed hosts or mobile hosts 18 (e.g., lap top computers, cellular telephones and PDAs).

In another embodiment the mobile devices 18 may have local RF or IR capability, such as Bluetooth^{™} capability, and in this case the WLAN Access Point 36 may be embodied as a Bluetooth^{™} device or transceiver.

In general, the various embodiments of the mobile devices 18 can include, but are not limited to, cellular telephones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions. Non-mobile (fixed) devices, such as desk-top PCs, may also benefit from the use of the embodiments of this invention.

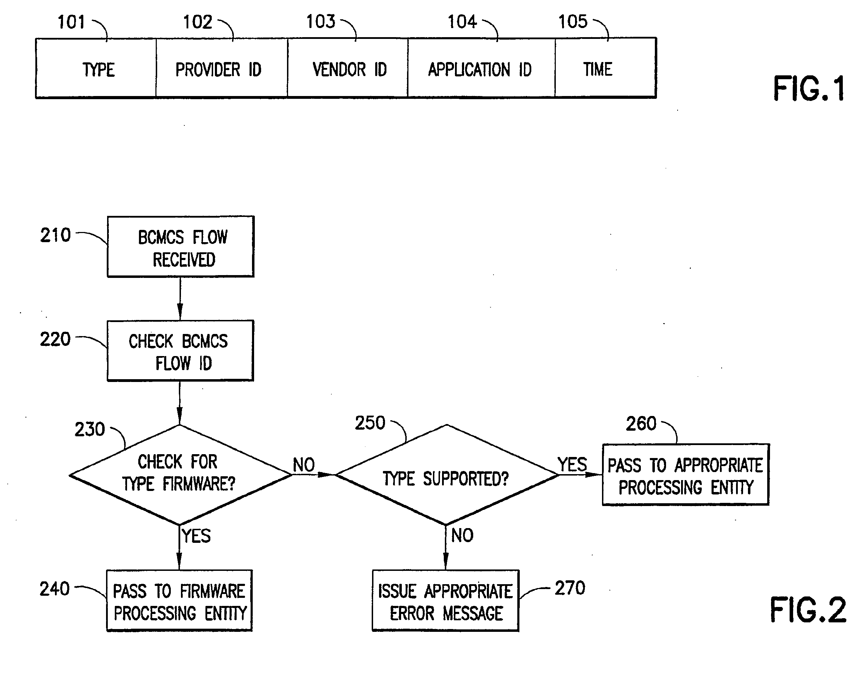

The construction of an exemplary one of the mobile hosts 18 is also shown in Figure 3, where the mobile host 18 includes a controller 18A, such as one or microprocessors, and a memory 18B that stores data, including program instructions for directing the controller in execute methods in accordance with this invention, such as the method depicted in Fig. 2 and described in further detail below. The mobile host 18 typically also includes a suitable transceiver 18C (e.g., a cellular and/or WLAN RF transceiver) and antenna 18D. In optical embodiments of this invention the transceiver 18C and antenna 18D are modified appropriately. Typically a suitable user interface (UI) 18E is provided, such as a keypad, or keyboard and/or touch screen and a display.

In the non-limiting embodiment depicted in Figure 3 the service provider 40 (a provider of a multicast service) coupled to the IP network 35 may announce the availability of a multicast service. Each device 38 may discover the multicast service, and may have the opportunity to join the multicast session. This can involve downloading software and/or updating already installed software, as non-limiting examples. The multicast service provider 40 may be part of the serving network, or an independent entity (possibly a subscription-based serving entity).

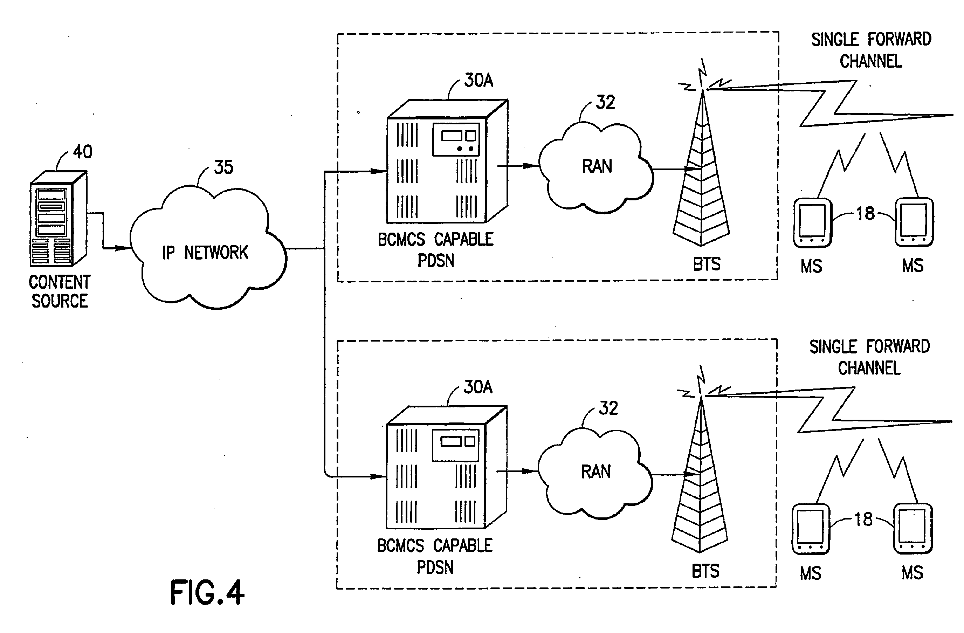

Figure 4 shows a high level view of the BCMCS, and is taken from a document: 3GPP2 S.R0083-0, Version 1.0, Version Date: 16 October 2003, "Broadcast-Multicast Service Security Framework". In this view of the BCMCS system it can be seen that there can be multiple RANs 32 each serviced by a BCMCS-capable Packet Data Support Node (PDSN) 30A. A single forward channel from each illustrated cellular system Base Transceiver Station (BTS) sends the same data simultaneously (broadcasts) to multiple mobile stations or mobile hosts 18.

When the mobile host 18 receives data in a multicast flow, in order to make use of the data, it has to be managed. Also, in order to make efficient use of the received data, various BCMCS flows should be correctly managed. BCMCS flow is identified by the conventional BCMCS_FLOW_ID field, which can be a 16 bit, 24 bit or 32 bit identifier. The number of BCMCS flows is specified by NUM_BCMS_FLOWS.

Certain mobile applications require the carrier or multicast service provider 40 to perform large-scale updates of the same data. One example is updating firmware, which is common to all devices 38 of a specific make and model. If the BCMCS framework is used for the delivery of firmware updates, then the mobile host 18 should be able to identify the data. This is because each piece of data received at the mobile host 18 may have a different use. The firmware may require an additional security mechanism, such as decryption, as it may be critical software in the mobile host 18. The mobile host 18, after receiving the data, should channel it to the entity in the mobile host 18 handling the firmware. Similarly another software may have a different requirement, such as software related to an application. In another case, the flow may include a video stream. As such, it can be appreciated that it is important to differentiate BCMCS flows from one another, and what is received in each flow. Prior to this invention, there was not standard way (no non-network specific way) of performing this function.

### Differentiating content in the BCMCS flow

The BCMCS_FLOW_ID is used to identify a BCMCS session in different phases of the service. This parameter is also included in a BCMCS Service Parameters message (BSPM), which is a signaling message sent on the paging channel or a Broadcast Control channel. Similarly, BCMCS_FLOW_ID can be included in other messages. In order to differentiate the contents of each BCMCS flow, the BCMCS_FLOW_ID is preferably carefully designed in accordance with embodiments of this invention. A generic structuring of the BCMCS_FLOW_ID that creates classes or categories of content is shown in Figure 1, and is described as follows.

Type 101: The Type field 101 specifies the generic content type in the BCMCS flow. Examples of the type can be, but are limited to, firmware, application software, video, audio, and so forth.

Provider ID 102: Identifies the provider of the firmware. This is the identification of the service provider 40, and may identify a carrier updating firmware. The Provider ID 102 may be the ID of the server that is managing the firmware updates.

Vendor ID 103: The unique ID of the Vendor of the firmware. This can be taken from the Electronic Serial Number (ESN) or the Mobile Equipment Identifier (MEID), as two non-limiting examples.

Application ID 104: This is the identifier of the application in the mobile device 38, which uses or consumes the content delivered in the BCMCS flow.

Time 105: The Time 105 is an optional field whereby it becomes possible to send the time when a specific multicast/ broadcast flow begins, as part of the BCMCS_FLOW_ID, or as a separate parameter in the BSPM.

The above selection of parameters can also help the mobile to develop suitable display for multicast services. For example, using content type, time, application id etc., a menu of all BCMCS flows can be displayed to the user via the user interface 18E.

### Process in the mobile host 18

Reference is made to Figure 2, which is a logic flow diagram showing the process in the mobile host 18 during the reception of a BCMCS flow. Processing of firmware has requirements different from other software related to applications and services. Processing of received firmware in the flow diagram may include firmware integrity check, decryption, descrambling, backing up old firmware and updating the firmware.

Referring to Figure 2, a BCMCS Flow is received at step 210, and the BCMCS_FLOW_ID is checked at step 220. A check is made for the type of content at step 230 (Type field 101 is examined), and if the type indicates firmware, the flow is passed to a firmware processing entity in the mobile host 18 (step 240). If not firmware, the content type 101 is checked for a content type that may be supported (step 250). If it is a type that is supported, the flow is passed to appropriate processing entity for that particular content type at step 260 (e.g., audio/visual content is passed to an audio/visual player of the mobile host 18). If the content is not a type that is supported, then an error message is issued, possibly to the user via the UI 18E, at step 270.

Another use case of differentiating BCMCS flow is in Quality of Service (QoS) management. QoS parameters can be different for different types of BCMCS content. Differentiating contents aids in applying and/or managing various QoS settings.

While this invention has been described in the context of presently preferred embodiments, it is possible that those skilled in the art may derive various changes to the teachings of this invention, when guided by the foregoing disclosure. As but a few non-limiting examples, in one embodiment the mobile host 18 can request information about a multicast program from the content server 40. In another embodiment the multicast identification information shown in Figure 1 can include one or more securityparameters. In a further embodiment, the content server 40 may send a list of multicast flows with the identification information. In another embodiment the user can select a multicast program based on flow identification information by using the UI 18E. In a still further embodiment, the user, or the mobile host 18 automatically, can selectively request information about a multicast content flow, such as the multicast update of firmware and/or application data. In another embodiment the multicast identification information shown in Figure 1 can be represented using Extended Markup Language (XML), or Synchronization Markup Language (SyncML), for transmission over-the-air (OTA).

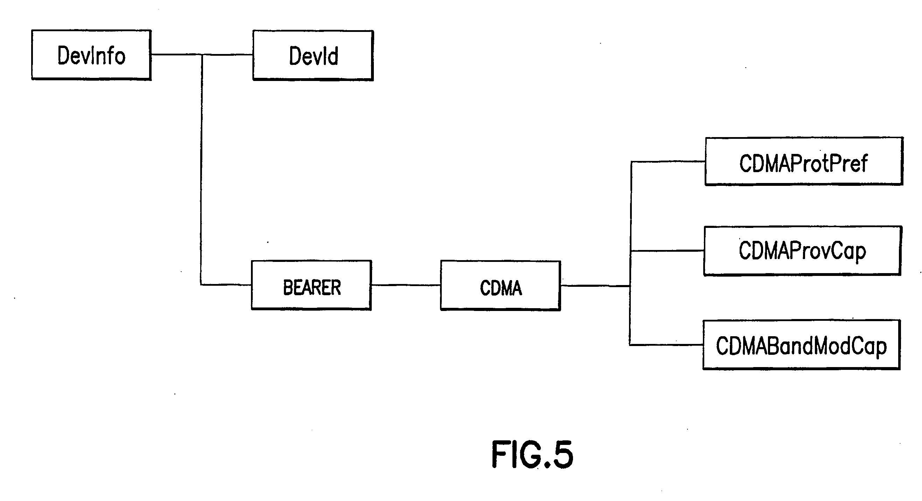

In a still further embodiment the multicast identification information associated with different multicast flows can be represented and stored in a tree-like structure associated with a management framework, such as in an Open Mobile Alliance (OMA) Device Management framework. Reference in this regard may be had, as an example, to 3GGP2 IOTA (IP-based Over the Air) device management documentation. For example, Figure 5 shows a non-limiting example of a prior art management tree for managing CDMA mobile stations using IOTA DM, specifically a CDMA device information (Devinfo) subtree. In Figure 5 DevId is the fixed identifier of the device (e.g., ESN or MEID), CDMAProtPref specifies a current preference to describe objects and provides backwards compatibility with TIA/EIA-683 standard features, CDMAProvCap specifies legacy features supported by the device, and CDMABandModCap is a field to describe the band and mode capabilities of the device. The subtree shown in Figure 5 is provided for illustration purposes, as this structure would be modified as need to accommodate the multicast identification information associated with different multicast flows, in accordance with embodiments of this invention.

It should thus be appreciated that the foregoing and other modifications to the teachings in accordance with this invention should be found to fall within the scope of the teachings of this invention, and are subsumed thereby.

## Claims

1. A method to operate a wireless data communications system, comprising:
receiving at a device a multicast message flow comprising content and a flow identification;
determining a type of content from multicast identification information that comprises a part of the flow identification; and
passing the flow to an appropriate content processing entity.

2. A method as in claim 1, further comprising sending a request from the device to obtain information about a multicast program from a content server.

3. A method as in claim 1, where the multicast identification information comprises security information associated with the content.

4. A method as in claim 1, where a content server sends a list of multicast flows as part of the multicast identification information.

5. A method as in claim 1, further comprising selecting a multicast program based on the multicast identification information via a user interface of the device.

6. A method as in claim 1, further comprising selectively requesting from a content server descriptive information regarding a multicast content flow.

7. A method as in claim 6, where the requested descriptive information concerns an update of at least one of firmware and application data.

8. A method as in claim 1, where the multicast identification information is represented using one of Extended Markup Language (XML), or Synchronization Markup Language (SyncML), for transmission over-the-air (OTA).

9. A method as in claim 1, where multicast identification information associated with different multicast flows is represented in a tree-like structure associated with a management framework.

10. A method as in claim 9, where the management framework comprises an Open Mobile Alliance (OMA) Device Management framework.

11. A mobile host comprising a wireless transceiver coupled to a controller that operates under control of a stored program to receive a multicast message flow comprising content and a flow identification; to determine a type of content from multicast identification information that comprises a part of the flow identification; and to pass the flow to an appropriate content processing entity.

12. A mobile host as in claim 11, said controller further operable to send a request to obtain information about a multicast program from a content server.

13. A mobile host as in claim 11, where the multicast identification information comprises security information associated with the content.

14. A mobile host as in claim 11, where said controller is further operable to receive a list of multicast flows from a content server as part of the multicast identification information.

15. A mobile host as in claim 11, further comprising a user interface, and where said controller is further operable to select a multicast program based on the multicast identification information in accordance with an input received from said user interface.

16. A mobile host as in claim 11, where said controller is further operable to selectively request from a content server descriptive information regarding a multicast content flow.

17. A mobile host as in claim 16, where the requested descriptive information concerns an update of at least one of firmware and application data.

18. A mobile host as in claim 11, where the multicast identification information is represented using one of Extended Markup Language (XML), or Synchronization Markup Language (SyncML), for transmission over-the-air (OTA) to said mobile host.

19. A mobile host as in claim 11, where multicast identification information associated with different multicast flows is represented in a tree-like structure associated with a management framework.

20. A mobile host as in claim 19, where the management framework comprises an Open Mobile Alliance (OMA) Device Management framework.

21. A mobile host as in claim 11, where said multicast identification information is represented as a data structure and where said controller is operable to parse said data structure to retrieve flow-related information therefrom, said data structure comprising fields that include a type identification field specifying a flow type; a provider identification field for identifying a provider of firmware; a vendor identification for identifying a vendor of firmware; and an application identification field for identifying an application in the mobile host that uses the content delivered in the flow.

22. A multicast content server coupled to a plurality of mobile hosts via at least one wireless network, said server operable to send a multicast message flow comprising content and a flow identification towards said plurality of mobile hosts, said flow identification comprising multicast identification information represented as a data structure comprising fields that include a type identification field specifying a flow type; a provider identification field for identifying a provider of firmware; a vendor identification for identifying a vendor of firmware; and an application identification field for identifying an application in each of the plurality of mobile hosts that uses the content delivered in the flow.

23. A multicast content server as in claim 22, where the multicast identification information is represented using one of Extended Markup Language (XML), or Synchronization Markup Language (SyncML), for transmission over-the-air (OTA) to said plurality of mobile hosts.

24. A multicast content server as in claim 22, where multicast identification information associated with different multicast flows is represented in a tree-like structure associated with a management framework.

25. A multicast content server as in claim 24, where the management framework comprises an Open Mobile Alliance (OMA) Device Management framework.

26. A data structure for the management of a multicast flow having content to a plurality of mobile hosts, said data structure comprising a type identification field specifying a flow type; a provider identification field for identifying a provider of firmware; a vendor identification for identifying a vendor of firmware; and an application identification field for identifying an application in the mobile host that uses the content delivered in the flow.

27. A data structure as in claim 26, where said data structure is represented using one of Extended Markup Language (XML), or Synchronization Markup Language (SyncML), for transmission over-the-air (OTA) to said plurality of mobile hosts.

28. A data structure as in claim 26, where said data structure forms a part of multicast identification information, and where multicast identification information associated with different multicast flows is represented in a tree-like structure associated with a management framework.

29. A data structure as in claim 28, where the management framework comprises an Open Mobile Alliance (OMA) Device Management framework.

## Patentansprüche

1. Verfahren zum Betreiben eines drahtlosen Datenkommunikationssystems, umfassend:
- Empfangen eines Multicast-Nachrichtenflusses an einer Vorrichtung, umfassend Inhalt und eine Flusskennung;
- Bestimmen eines Typs von Inhalt aus Multicast-Kennungsinformationen, die einen Teil der Flusskennung umfassen; und
- Weitergeben des Flusses an eine geeignete Inhaltsverarbeitungseinheit.

2. Verfahren nach Anspruch 1, weiter umfassend
- Senden einer Anforderung von der Vorrichtung, um Informationen über ein Multicast-Programm von einem Inhalts-Server zu erhalten.

3. Verfahren nach Anspruch 1, wobei die Multicast-Kennungsinformationen Sicherheitsinformationen umfassen, die mit dem Inhalt verknüpft sind.

4. Verfahren nach Anspruch 1, wobei ein Inhalts-Server eine Liste von Multicast-Flüssen als Teil der Multicast-Kennungsinformationen sendet.

5. Verfahren nach Anspruch 1, weiter umfassend
- Auswählen eines Multicast-Programms, basierend auf den Multicast-Kennungsinformationen, über eine Benutzerschnittstelle der Vorrichtung.

6. Verfahren nach Anspruch 1, weiter umfassend
- selektives Anfordern von beschreibenden Informationen von einem Inhalts-Server, betreffend einen Multicast-Inhaltsfluss.

7. Verfahren nach Anspruch 6, wobei die angeforderten beschreibenden Informationen sich auf eine Aktualisierung von mindestens einem von Firmware und Anwendungsdaten beziehen.

8. Verfahren nach Anspruch 1, wobei die Multicast-Kennungsinformationen dargestellt werden unter Verwendung von Extended Markup Language (XML) oder Synchronization Markup Language (SyncML), für eine Over-the-Air (OTA) Übertragung.

9. Verfahren nach Anspruch 1, wobei Multicast-Kennungsinformationen, die mit verschiedenen Multicast-Flüssen verknüpft sind, in einer baumartigen Struktur dargestellt werden, verknüpft mit einer Verwaltungsgrundstruktur.

10. Verfahren nach Anspruch 9, wobei die Verwaltungsgrundstruktur eine Open Mobile Alliance (OMA) Vorrichtungs-Verwaltungsgrundstruktur umfasst.

11. Ein Mobil-Host, umfassend einen drahtlosen Sende-Empfänger, der mit einer Steuereinrichtung gekoppelt ist, die unter der Steuerung eines gespeicherten Programms arbeitet, um einen Multicast-Nachrichtenfluss zu empfangen, der Inhalt und eine Flusskennung umfasst; zum Bestimmen eines Typs von Inhalt aus Multicast-Kennungsinformationen, die einen Teil der Flusskennung umfassen; und zum Weitergeben des Flusses an eine geeignete Inhaltsverarbeitungseinheit.

12. Mobil-Host nach Anspruch 11, wobei die Steuereinrichtung weiter betriebsfähig ist, eine Anforderung zu senden, um Informationen über ein Multicast-Programm von einem Inhalts-Server zu erhalten.

13. Mobil-Host nach Anspruch 11, wobei die Multicast-Kennungsinformationen Sicherheitsinformationen umfassen, die mit dem Inhalt verknüpft sind.

14. Mobil-Host nach Anspruch 11, wobei die Steuereinrichtung weiter betriebsfähig ist, eine Liste von Multicast-Flüssen von einem Inhalts-Server als Teil der Multicast-Kennungsinformationen zu empfangen.

15. Mobil-Host nach Anspruch 11, weiter umfassend eine Benutzerschnittstelle, und wobei die Steuereinrichtung weiter betriebsfähig ist, ein Multicast-Programm basierend auf den Multicast-Kennungsinformationen gemäß einer Eingabe auszuwählen, die von der Benutzerschnittstelle empfangen wird.

16. Mobil-Host nach Anspruch 11, wobei die Steuereinrichtung weiter betriebsfähig ist, um von einem Inhalts-Server selektiv beschreibende Informationen betreffend einen Multicast-Inhalts-Fluss anzufordern.

17. Mobil-Host nach Anspruch 16, wobei die angeforderten beschreibenden Informationen sich auf eine Aktualisierung von mindestens einem von Firmware und Anwendungsdaten beziehen.

18. Mobil-Host nach Anspruch 11, wobei die Multicast-Kennungsinformationen dargestellt werden unter Verwendung von Extended Markup Language (XML) oder Synchronization Markup Language (SyncML), für eine Over-the-Air (OTA) Übertragung an den Mobil-Host.

19. Mobilhost nach Anspruch 11, wobei Multicast-Kennungsinformationen, die mit verschiedenen Multicast-Flüssen verknüpft sind, in einer baumartigen Struktur dargestellt werden, die mit einer Verwaltungsgrundstruktur verknüpft ist.

20. Mobilhost nach Anspruch 19, wobei die Verwaltungsgrundstruktur eine Open Mobile Alliance (OMA) Vorrichtungs-Verwaltungsgrundstruktur umfasst.

21. Mobilhost nach Anspruch 11, wobei die Multicast-Kennungsinformationen als eine Datenstruktur dargestellt sind und wobei die Steuereinrichtung betriebsfähig ist, die Datenstruktur zu analysieren, um Fluss-bezogene Informationen daraus abzurufen, wobei die Datenstruktur Felder umfasst, die ein Typ-Kennungsfeld, das einen Fluss-Typ angibt; ein Anbieter-Kennungsfeld zum Bezeichnen eines Anbieters von Firmware; eine Verkäufer-Kennung zum Bezeichnen eines Verkäufers von Firmware; und ein Anwendungs-Kennungsfeld zum Bezeichnen einer Anwendung in dem Mobil-Host einschließen, die den in dem Fluss bereitgestellten Inhalt verwendet.

22. Multicast-Inhalts-Server, gekoppelt mit mehreren Mobil-Hosts über mindestens ein drahtloses Netzwerk, wobei der Server betriebsfähig ist zum Senden eines Multicast-Nachrichtenflusses umfassend Inhalt und eine Fluss-Kennung in Richtung der mehreren Mobil-Hosts, wobei die Fluss-Kennung Multicast-Kennungsinformationen umfasst, die als eine Datenstruktur dargestellt sind, die Felder umfasst, die ein Typ-Kennungsfeld, das einen Fluss-Typ angibt; ein Anbieter-Kennungsfeld zum Bezeichnen eines Anbieters von Firmware; eine Verkäufer-Kennung zum Bezeichnen eines Verkäufers von Firmware; und ein Anwendungs-Kennungsfeld zum Bezeichnen einer Anwendung in jedem der mehreren Mobil-Hosts einschließen, die den in dem Fluss bereitgestellten Inhalt verwendet.

23. Multicast-Inhalts-Server nach Anspruch 22, wobei die Multicast-Kennungsinformationen dargestellt werden unter Verwendung von Extended Markup Language (XML) oder Synchronization Markup Language (SyncML), für eine Over-the-Air (OTA) Übertragung an die mehreren Mobil-Hosts.

24. Multicast-Inhalts-Server nach Anspruch 22, wobei Multicast-Kennungsinformationen, die mit verschiedenen Multicast-Flüssen verknüpft sind, in einer baumartigen Struktur dargestellt sind, die mit einer Verwaltungsgrundstruktur verknüpft ist.

25. Multicast-Inhalts-Server nach Anspruch 24, wobei die Verwaltungsgrundstruktur eine Open Mobile Alliance (OMA) Vorrichtungs-Verwaltungsgrundstruktur umfasst.

26. Datenstruktur für die Verwaltung eines Multicast-Flusses, umfassend Inhalt, an mehrere Mobil-Hosts, wobei die Datenstruktur ein Typ-Kennungsfeld, das einen Fluss-Typ angibt; ein Anbieter-Kennungsfeld zum Bezeichnen eines Anbieters von Firmware; eine Verkäufer-Kennung zum Bezeichnen eines Verkäufers von Firmware; und ein Anwendungs-Kennungsfeld zum Bezeichnen einer Anwendung in dem Mobil-Host einschließt, die den in dem Fluss bereitgestellten Inhalt verwendet.

27. Datenstruktur nach Anspruch 26, wobei die Datenstruktur dargestellt ist unter Verwendung von Extended Markup Language (XML) oder Synchronization Markup Language (SyncML), für eine Over-the-Air (OTA) Übertragung an die mehreren Mobil-Hosts.

28. Datenstruktur nach Anspruch 26, wobei die Datenstruktur einen Teil von Multicast-Kennungsinformationen bildet, und wobei Multicast-Kennungsinformationen, die mit verschiedenen Multicast-Flüssen verknüpft sind, in einer baumartigen Struktur dargestellt sind, die mit einer Verwaltungsgrundstruktur verknüpft ist.

29. Datenstruktur nach Anspruch 28, wobei die Verwaltungsgrundstruktur eine Open Mobile Alliance (OMA) Vorrichtungs-Verwaltungsgrundstruktur umfasst.

## Revendications

1. Procédé destiné à faire fonctionner un système de communication de données sans fil, comprenant les étapes consistant à :
recevoir à un dispositif un flux de messages de multidiffusion comprenant un contenu et une identification de flux ;
déterminer un type de contenu à partir des informations d'identification de multidiffusion comprenant une partie de l'identification de flux ; et
faire passer le flux à une entité de traitement de contenu appropriée.

2. Procédé selon la revendication 1, comprenant en outre l'étape consistant à envoyer une demande à partir du dispositif pour obtenir des informations au sujet d'un programme de multidiffusion d'un serveur de contenu.

3. Procédé selon la revendication 1, dans lequel les informations d'identification de multidiffusion comprennent des informations de sécurité associées au contenu.

4. Procédé selon la revendication 1, dans lequel un serveur de contenu envoie une liste de flux de multidiffusion dans le cadre des informations d'identification de multidiffusion.

5. Procédé selon la revendication 1, comprenant en outre l'étape consistant à sélectionner un programme de multidiffusion sur la base des informations d'identification de multidiffusion par l'intermédiaire d'une interface utilisateur du dispositif.

6. Procédé selon la revendication 1, comprenant en outre l'étape consistant à demander sélectivement à un serveur de contenu des informations descriptives concernant un flux de contenu de multidiffusion.

7. Procédé selon la revendication 6, dans lequel les informations descriptives demandées concernent une mise à jour d'au moins l'un de microprogrammes et de données d'application.

8. Procédé selon la revendication 1, dans lequel les informations d'identification de multidiffusion sont représentées en utilisant un langage parmi les langages suivants : un langage de marquage étendu (XML), ou un langage de marquage de synchronisation (SyncML), pour une transmission hertzienne (OTA).

9. Procédé selon la revendication 1, dans lequel les informations d'identification de multidiffusion associées à différents flux de multidiffusion sont représentées dans une structure arborescente associée à un cadre de gestion.

10. Procédé selon la revendication 9, dans lequel le cadre de gestion comprend un cadre de gestion de dispositifs d'Alliance Mobile Ouverte (OMA).

11. Hôte mobile comprenant un émetteur-récepteur sans fil couplé à un contrôleur qui fonctionne sous le contrôle d'un programme mémorisé pour recevoir un flux de messages de multidiffusion comprenant un contenu et une identification de flux ; pour déterminer un type de contenu à partir des informations d'identification de multidiffusion comprenant une partie de l'identification de flux ; et pour faire passer le flux à une entité de traitement de contenu appropriée.

12. Hôte mobile selon la revendication 11, ledit contrôleur étant en outre utilisable pour envoyer une demande pour obtenir des informations au sujet d'un programme de multidiffusion d'un serveur de contenu.

13. Hôte mobile selon la revendication 11, dans lequel les informations d'identification de multidiffusion comprennent des informations de sécurité associées au contenu.

14. Hôte mobile selon la revendication 11, dans lequel ledit contrôleur est en outre utilisable pour recevoir une liste de flux de multidiffusion d'un serveur de contenu dans le cadre des informations d'identification de multidiffusion.

15. Hôte mobile selon la revendication 11, comprenant en outre une interface utilisateur, et dans lequel ledit contrôleur est en outre utilisable pour sélectionner un programme de multidiffusion sur la base des informations d'identification de multidiffusion en fonction d'une entrée reçue de ladite interface utilisateur.

16. Hôte mobile selon la revendication 11, dans lequel ledit contrôleur est en outre utilisable pour demander sélectivement à un serveur de contenu des informations descriptives concernant un flux de contenu de multidiffusion.

17. Hôte mobile selon la revendication 16, dans lequel les informations descriptives demandées concernent une mise à jour d'au moins l'un de microprogrammes et de données d'application.

18. Hôte mobile selon la revendication 11, dans lequel les informations d'identification de multidiffusion sont représentées en utilisant l'un d'un langage de marquage étendu (XML) ou d'un langage de marquage de synchronisation (SyncML) pour une transmission hertzienne (OTA) au dit hôte mobile.

19. Hôte mobile selon la revendication 11, dans lequel les informations d'identification de multidiffusion associées à différents flux de multidiffusion sont représentées dans une structure arborescente associée à un cadre de gestion.

20. Hôte mobile selon la revendication 19, dans lequel le cadre de gestion comprend un cadre de gestion de dispositifs d'Alliance Mobile Ouverte (OMA).

21. Hôte mobile selon la revendication 11, dans lequel lesdites informations d'identification de multidiffusion sont représentées sous la forme d'une structure de données et dans lequel ledit contrôleur est utilisable pour effectuer l'analyse de ladite structure de données pour extraire des informations relatives au flux de celle-ci, ladite structure de données comprenant des champs qui comprennent un champ d'identification de type spécifiant un type de flux ; un champ d'identification de fournisseur pour identifier un fournisseur de microprogrammes ; un champ d'identification de vendeur pour identifier un vendeur de microprogrammes ; et un champ d'identification d'application pour identifier une application dans l'hôte mobile qui utilise le contenu fourni dans le flux.

22. Serveur de contenu de multidiffusion couplé à une pluralité d'hôtes mobiles par l'intermédiaire d'au moins un réseau sans fil, ledit serveur étant utilisable pour envoyer un flux de messages de multidiffusion comprenant un contenu et une identification de flux vers ladite pluralité d'hôtes mobiles, ladite identification de flux comprenant des informations d'identification de multidiffusion représentées sous la forme d'une structure de données comprenant des champs qui comprennent un champ d'identification de type spécifiant un type de flux ; un champ d'identification de fournisseur pour identifier un fournisseur de microprogrammes ; un champ d'identification de vendeur pour identifier un vendeur de microprogrammes ; et un champ d'identification d'application pour identifier une application dans chacun de la pluralité d'hôtes mobiles qui utilise le contenu fourni dans le flux.

23. Serveur de contenu de multidiffusion selon la revendication 22, dans lequel les informations d'identification de multidiffusion sont représentées en utilisant un langage parmi les langages suivant : un langage de marquage étendu (XML), ou un langage de marquage de synchronisation (SyncML), pour une transmission hertzienne (OTA) à ladite pluralité d'hôtes mobiles.

24. Serveur de contenu de multidiffusion selon la revendication 22, dans lequel les informations d'identification de multidiffusion associées à différents flux de multidiffusion sont représentées dans une structure arborescente associée à un cadre de gestion.

25. Serveur de contenu de multidiffusion selon la revendication 24, dans lequel le cadre de gestion comprend un cadre de gestion de dispositifs d'Alliance Mobile Ouverte (OMA).

26. Structure de données pour la gestion d'un flux de multidiffusion ayant un contenu à une pluralité d'hôtes mobiles, ladite structure de données comprenant un champ d'identification de type spécifiant un type de flux ; un champ d'identification de fournisseur pour identifier un fournisseur de microprogrammes ; un champ d'identification de vendeur pour identifier un vendeur de microprogrammes ; et un champ d'identification d'application pour identifier une application dans l'hôte mobile qui utilise le contenu fourni dans le flux.

27. Structure de données selon la revendication 26, dans laquelle ladite structure de données est représentée en utilisant un langage parmi les langages suivants : un langage de marquage étendu (XML), ou un langage de marquage de synchronisation (SyncML), pour une transmission hertzienne (OTA) à ladite pluralité d'hôtes mobiles.

28. Structure de données selon la revendication 26, dans laquelle ladite structure dé données fait partie des informations d'identification de multidiffusion, et dans laquelle les informations d'identification de multidiffusion associées à différents flux de multidiffusion sont représentées dans une structure arborescente associée à un cadre de gestion.

29. Structure de données selon la revendication 28, dans laquelle le cadre de gestion comprend un cadre de gestion de dispositifs d'Alliance Mobile Ouverte (OMA).
